(19) Europäisches Patentamt
European Patent Office
Office européen des brevets

(11) **EP 3 211 377 B1**

## (12) EUROPÄISCHE PATENTSCHRIFT

(45) Veröffentlichungstag und Bekanntmachung des Hinweises auf die Patenterteilung:
**31.01.2018  Patentblatt 2018/05**

(51) Int Cl.:
*G01D 3/08* (2006.01)          *G06K 7/10* (2006.01)

(21) Anmeldenummer: **16157940.4**

(22) Anmeldetag: **29.02.2016**

(54) **SENSOR UND VERFAHREN ZUM HEIZEN EINES SENSORS**

SENSOR AND METHOD FOR HEATING A SENSOR

CAPTEUR ET PROCEDE DE CHAUFFAGE D'UN CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.08.2017  Patentblatt 2017/35**

(73) Patentinhaber: **SICK AG**
**79183 Waldkirch (DE)**

(72) Erfinder: **Seitz, Stefan**
**79341 Kenzingen (DE)**

(56) Entgegenhaltungen:
**WO-A1-2006/037283      CN-B- 103 869 844**
**US-A1- 2004 212 861**

**Beschreibung**

Die Erfindung betrifft einen Sensor, insbesondere einen optoelektronischen Sensor, sowie ein Verfahren zum Heizen eines Sensors nach dem Oberbegriff von Anspruch 1 beziehungsweise 13.

Der Betrieb von Sensoren ist bei niedrigen Temperaturen häufig nicht ohne weiteres möglich, vor allem wenn die Umgebungstemperatur deutlich unter den Gefrierpunkt fällt. Es besteht die Gefahr, dass nicht alle eingesetzten elektronischen und elektromechanischen Bauteile für den Einsatz bei tiefen Temperaturen geeignet beziehungsweise zugelassen sind. Besonders optoelektronische Sensoren sind empfindlich gegen Beschlag an den optischen Elementen, wie Linsen oder einer Frontscheibe, die sogar vereisen kann.

Eine bekannte Lösung ist das Erwärmen des Gesamtgeräts oder von dessen kritischen Komponenten durch eine Heizung. Die Leistungsabgabe einer herkömmlichen Heizbaugruppe ist aber kaum variabel. Das Abrufen der weitgehend konstanten Heizleistung erfolgt praktisch digital durch zyklisches Zu- und Abschalten. Durch thermische Trägheit und energetische Ausmittelung entsteht die gewünschte Innentemperatur, und damit ist aus thermischer Sicht das Ziel erreicht.

Aus elektrischer Sicht zeigt dieses Verfahren jedoch Nachteile. Die Leistungsentnahme ist durch den Wechsel von Phasen mit hohen und niedrigen Leistungsanforderungen sehr unterschiedlich. In den Heizphasen wird deutlich mehr Leistung gefordert als der mittlere Leistungsbedarf. Die speisende Stromversorgungsbaugruppe muss in der Lage sein, auch die geforderten Spitzenleistungen bereitzustellen. Dies kann in der Regel nur durch eine entsprechende Überdimensionierung erreicht werden. Gleiches trifft für die benötigten Leitungen, Steckverbinder und Leitungsschutzelemente innerhalb des Versorgungskreises zu.

Die DE 199 33 518 B4 offenbart ein Barcodelesegerät mit einem Heizelement, dessen Wärme durch die Luftzirkulation verteilt wird, die ein rotierendes Polygonspiegelrad erzeugt. Die Steuerung der Heizung wird nicht diskutiert.

In der DE 10 2006 054 492 B4 wird ebenfalls ein Barcodelesegerät beheizt, wobei hier ein Wärmeleitkörper als Aufnahmekonsole zur Halterung der optischen beziehungsweise elektronischen Komponente gebildet ist. In einer Ausführungsform sind mehrere Heizelemente vorgesehen, die zentral mittels einer Steuer- und Regeleinheit schaltbar sind.

Die US 6 612 493 offenbart einen weiteren optischen Scanner mit einem Heizmodul, das thermostatisch gesteuert wird. Dadurch wird geheizt, sobald die Lufttemperatur unter einen bestimmten Wert fällt.

Die US 7 798 411 B2 befasst sich mit einer Frontscheibe für einen optischen Scanner, die mittels PTC-Heizdraht (Positive Temperature Coefficient) Beschlag vermeidet. Die besondere Temperaturcharakteristik des Heizdrahtes sorgt für eine Selbstregelung, die vor Überhitzung schützt.

Aus der CN 103 869 844 B ist eine Kamera für ein Raumfahrzeug bekannt. Mehrere CCD-Chips sind auf einem Mikro-Wärmerohr angeordnet, in dessen Inneren sich ein Dünnschicht-Heizelement befindet. Über eine Adapterplatte steht das Mikro-Wärmerohr mit einem weiteren Wärmerohr in Kontakt, das eine Verbindung zu einer Wärmesenke herstellt. Das Heizelement wird aktiviert, wenn die CCDs abgeschaltet werden, und umgekehrt beim Einschalten der CCDs sofort deaktiviert. Überschüssige Wärme wird jeweils über die Wärmesenke abgegeben, um die Temperatur konstant zu halten.

Es ist daher Aufgabe der Erfindung, die Beheizung eines Sensors zu verbessern.

Diese Aufgabe wird durch einen Sensor sowie ein Verfahren zum Heizen eines Sensors nach dem Oberbegriff von Anspruch 1 beziehungsweise 13 gelöst. Der Sensor ist vorzugsweise ein optoelektronischer Sensor, insbesondere ein Codeleser. Der Sensor weist mindestens eine Sensorfunktionsgruppe auf. Unter diesem Begriff sind beliebige elektrisch wirkende Komponenten des Sensors zusammengefasst, die je nach dessen Bauart stark variieren. Der Sensor kann zusätzliche Bauteile aufweisen, was in der Regel auch der Fall ist, wie Linsen, Halterungen oder Gehäuse. Solche Bauteile haben möglicherweise auch einen spezifizierten Wärmearbeitsbereich, nehmen selbst aber keine elektrische Leistung auf und erzeugen dementsprechend auch keine eigene Abwärme.

Außerdem besitzt der Sensor eine Heizeinrichtung mit einer Heizungssteuerung, um den Sensor auch in kalter Umgebung in einen Temperaturbereich zu bringen und dort zu halten, in dem die Funktionsfähigkeit gewährleistet ist.

Die Erfindung geht nun von dem Grundgedanken aus, bei der Dimensionierung und/oder Steuerung der Heizeinrichtung die Leistungsaufnahme der Sensorfunktionsgruppe zu berücksichtigen und insbesondere die Heizleistung entsprechend anzupassen.

Die Erfindung hat den Vorteil, dass eine wesentlich gleichförmigere elektrische Leistungsaufnahme des Sensors erreicht wird. Im Idealfall werden Schwankungen der elektrischen Leistungsaufnahme vollständig ausgeglichen. Die Leistungsanforderungen an die Stromversorgung des Sensors werden deutlich verringert, so dass dessen Netzteil kleiner dimensioniert werden oder weitere Sensoren versorgen kann. Durch den Wegfall oder wenigstens die starke Verringerung von Stromspitzen in der Sensorversorgung wird eine höhere Netzstabilität ohne Spannungseinbrüche und Spannungsspitzen und insgesamt mit geringerer Beeinträchtigung benachbarter Verbraucher innerhalb des Stromkreises und auch einer höheren Betriebssicherheit erreicht. Es ergeben sich auch geringere Anforderungen an die Installationstechnik, mit verringerten Absicherungswerten und Leiterquerschnitten, weniger Kupferverbrauch, höherer Verdrahtungsflexibilität mit der Möglichkeit längerer Verdrahtungswege zwischen Stromversorgung und Sensor und einer vereinfachten Geräteanschlusstechnik am Sensor. Da Temperaturschwankungen im Inneren des Sensors verringert werden, erhöht sich dessen Zuverlässigkeit durch weniger thermische Ausdehnungseffekte und weniger thermischen Stress an Bauteilen und Lötstellen.

Die Heizungssteuerung ist bevorzugt dafür ausgebildet, die Summe aus Heizleistung und Leistungsaufnahme konstant zu halten. Ganz genau wird das in der Praxis nicht gelingen, Toleranzen sind also möglich. Die Heizeinrichtung fügt dann gerade die Wärme hinzu, die nicht ohnehin als Abwärme der Sensorfunktionsgruppe entsteht. Das sorgt für eine besonders gleichmäßige Leistungsaufnahme des Sensors als Ganzem und besonders gleichmäßige Beheizung. Besonders bevorzugt ist, die Summe aus Heizstrom und Sensorstrom konstant zu halten. Die Ströme bestimmen unter der Voraussetzung gleicher Versorgungsspannungen die Leistung. Sie lassen sich leicht ermitteln und steuern.

Die Sensorfunktionsgruppe weist bevorzugt mindestens eines der folgenden Bauelemente auf: einen Sender, einen Empfänger, eine analoge Schaltung, einen digitalen Baustein, einen Motor. Die konkreten Bauelemente hängen natürlich von der Art und Bauweise des Sensors ab. Praktisch jeder Sensor hat einen Empfänger für das Sensorsignal, viele Sensoren besitzen zusätzlich einen Sender. Ein Motor dient beispielsweise als Verstellmotor, in einem Scanner auch als Antrieb eines Dreh- oder Polygonradspiegels. Analoge Schaltungen können der Steuerung, Auswertung, Vorverarbeitung und Versorgung dienen, wie etwa ein Lasertreiber oder eine Hochspannungsversorgung einer APD. Digitale Bausteine, wie Mikroprozessoren, FPGAs (Field Programmable Gate Array) oder ASICs (Application Specific Integrated Circuit) dienen häufig der Auswertung, aber beispielsweise auch der Kommunikation nach außen zur Ausgabe von Messdaten oder zur Parametrierung.

Die Heizeinrichtung weist bevorzugt eine steuerbare Elektronikkomponente als Heizelement auf. Ein solches Element ist variabel, bauklein und leicht in den Sensor integrierbar, beispielsweise ein Transistor oder ein ohmscher Widerstand.

Die Heizungssteuerung ist bevorzugt dafür ausgebildet, in einer Anfangsphase mit hoher Heizleistung zu heizen und dann erst die Sensorfunktionsgruppe aktiv zu schalten. Beim Einschalten ist der Sensor möglicherweise noch zu kalt, um die Sensorfunktionsgruppe betreiben zu können. Deshalb wird zunächst nur geheizt, vorzugsweise mit der maximal verfügbaren Heizleistung, um rasch eine Betriebstemperatur der Sensorfunktionsgruppe zu erreichen. Ab diesem Zeitpunkt trägt dann die aktiv geschaltete Sensorfunktionsgruppe selbst zur Beheizung bei, und die Heizeinrichtung kann die Heizleistung entsprechend reduzieren.

Die Heizungssteuerung ist bevorzugt dafür ausgebildet, die Leistungsaufnahme zu parametrieren oder einzulernen. Dabei wird angenommen, dass die Leistungsaufnahme der Sensorfunktionsgruppe im Laufe des Betriebs regelmäßig bleibt. Diese Leistungsaufnahme wird entweder im Design bestimmt oder ab Werk oder vor Ort in einem Einlernvorgang durch Testbetrieb ermittelt. Meist wird dies über eine Konstante modelliert, aber auch ein Verlauf ist denkbar, beispielsweise wenn der Sensor nur zyklisch aktiv misst und deshalb die Sensorfunktionsgruppe eine ungleichmäßige, jedoch einigermaßen vorhersagbare Leistungsaufnahme hat.

Die Heizungssteuerung ist bevorzugt dafür ausgebildet, die Leistungsaufnahme zu messen. Dadurch steht die tatsächliche aktuelle Leistungsaufnahme zur Verfügung. Die Zeitauflösung wird beispielsweise durch Messzyklen eingestellt oder bereits per Design auf einen sinnvollen Wert festgelegt. Der Vorteil einer Messung der Leistungsaufnahme ist, dass deren Zeitverlauf deutlich genauer erfassbar wird und nicht nur auf der Annahme gleichartiger Abläufe basiert wie beim Parametrieren oder Einlernen. Dafür ist der Aufwand höher, um die Leistungsaufnahme messen zu können. Es sind auch Mischformen denkbar. Beispielsweise wird eine typische Leistungsaufnahme parametriert, und diese Information wird verwendet, wenn die Leistungsmessung ausfällt, um die Zyklen bis zur nächsten Messung zu überbrücken, die Messung zu plausibilisieren und dergleichen.

Die Heizeinrichtung weist bevorzugt eine Strommesseinheit für den in der Sensorfunktionsgruppe fließenden Strom auf, um so die Leistungsaufnahme zu bestimmen. Eine Strommessung ist vergleichsweise unaufwändig realisierbar. Zugleich ist der aufgenommene Strom in der Regel die Variable, welche neben der oft konstanten und bekannten anliegenden Eingangsspannung die Leistungsaufnahme festlegt.

Die Heizungssteuerung ist bevorzugt dafür ausgebildet, die Leistungsaufnahme nur für einen Teil der Sensorfunktionsgruppe zu bestimmen. Nochmals bevorzugt ist, dass derjenige Teil mit der relativ größten Leistungsaufnahme oder den größten Schwankungen oder der am stärksten thermisch wirksam ist, genutzt wird. Die nicht gemessenen Anteile können beispielsweise durch Heraufskalieren oder Konstanten berücksichtigt werden.

Der Sensor weist vorzugsweise einen mit der Heizeinrichtung verbundenen Temperaturfühler auf. Die Heizeinrichtung nutzt die gemessene Temperatur ergänzend und zur Plausibilisierung gegenüber den tatsächlich vorliegenden Temperaturen, etwa um die Heizleistung zusätzlich anzupassen, wenn ein vorgegebener Temperaturkorridor verlassen wird. Die Temperaturmessung ist in der Regel nur eine Notmaßnahme, da eine richtig ausgelegte Heizungssteuerung den Temperaturkorridor ohnehin und sogar deutlich genauer einhält. Wenn aber beispielsweise die Umgebung stark von den spezifizierten Bedingungen abweicht, kann eine solche Notmaßnahme hilfreich sein. Der Heizungssteuerung kann auch bekannt sein, etwa in Form einer Rechenvorschrift oder einer Nachschlagtabelle, welche Heizleistung bei welcher gemessenen Temperatur erforderlich ist, um in den Temperaturkorridor zurückzukehren. Dies und die Leistungsaufnahme der Sensorfunktionsgruppe erlaubt dann eine rasche Rückregelung in den Temperaturkorridor. Der Temperaturfühler kann die Temperatur im Inneren und/oder die Umgebungstemperatur messen.

Die Heizeinrichtung ist bevorzugt in einem eigenen Gehäuse untergebracht, das an ein Gehäuse der Sensorfunktionsgruppe angekoppelt wird. Damit entsteht ein Heizungsmodul, das von außen an dem Sensor angebracht werden kann. Das modulare Konzept erleichtert die Variantenbildung, Entwicklung, das Nach- oder Umrüsten, die Installation und die Wartung.

Die Heizeinrichtung ist bevorzugt in einem Gehäuse untergebracht, das ein Gehäuse der Sensorfunktionsgruppe umgibt. Bei dieser Alternativen wird das Gehäuse der Heizeinrichtung nicht nur an das Sensorgehäuse geführt, sondern umgibt den gesamten Sensor. Das erleichtert es, den Sensor selbst warm zu halten, und ermöglicht ebenfalls ein modulares Konzept mit der im vorigen Absatz erläuterten hohen Flexibilität.

Der Sensor weist bevorzugt mindestens ein Wärmekoppelelement zur Weiterleitung von Wärme der Heizeinrichtung und/oder von thermisch wirksamen Sensorkomponenten an kritische Stellen der Sensorfunktionsgruppe auf. Damit wird die Wärme im Sensor homogen verteilt beziehungsweise Wärme gezielt dorthin geführt, wo sie am meisten gebraucht wird. Wärmekoppelelemente können auch die Anbindung zu einem Gehäuse oder zwischen mehreren Gehäusen verbessern, wenn die Heizeinrichtung und/oder die Sensorfunktionsgruppe ein eigenes Gehäuse aufweist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1  eine Blockdarstellung eines beheizbaren Sensors;

Fig. 2  eine zeitabhängige Leistungsbetrachtung bei herkömmlicher Heizungssteuerung;

Fig. 3  ein Blockdiagramm eines beheizbaren Sensors mit einer erfindungsgemäßen Heizungssteuerung;

Fig. 4  eine zeitabhängige Leistungsbetrachtung in einer Ausführungsform der Erfindung unter Annahme einer konstanten Leistungsaufnahme einer Sensorfunktionsgruppe;

Fig. 5  eine zeitabhängige Leistungsbetrachtung in einer weiteren Ausführungsform, in der die tatsächliche Leistungsaufnahme der Sensorfunktionsgruppe gemessen wird, wobei hier die Leistungsaufnahme der Sensorsfunktionsgruppe Schwankungen unterliegt;

Fig. 6  eine Blockdarstellung einer Ausführungsform eines beheizbaren Sensors mit außen angekoppeltem Heizmodul; und

Fig. 7  eine Blockdarstellung einer Ausführungsform eines beheizbaren Sensors mit innenliegendem Heizmodul.

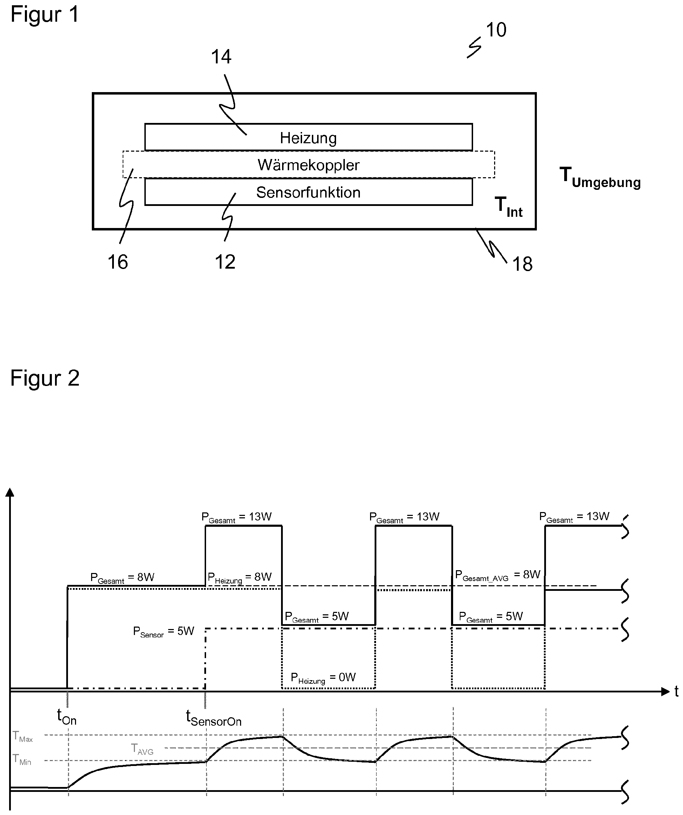

Figur 1 zeigt eine Blockdarstellung eines beheizbaren Sensors 10. Die Darstellung ist extrem vereinfacht und fasst die diversen Bauteile für den Sensorbetrieb in einer Sensorfunktionsgruppe 12 zusammen. Der Sensor 10 kann jedes bekannte Sensorprinzip verwenden, wie induktiv, magnetisch, kapazitiv, auf Basis von abgestrahltem oder geführtem Radar, Licht oder Ultraschall. Da optische Elemente besonders empfindlich gegen Beschlagbildung bei niedrigen Temperaturen sind, ist der Sensor 10 bevorzugt ein optoelektronischer Sensor, insbesondere ein Barcodescanner. Auf die konkreten Elemente und Anordnungen der Sensorfunktionsgruppe 12 wird hier nicht näher eingegangen und dies als bekannt vorausgesetzt.

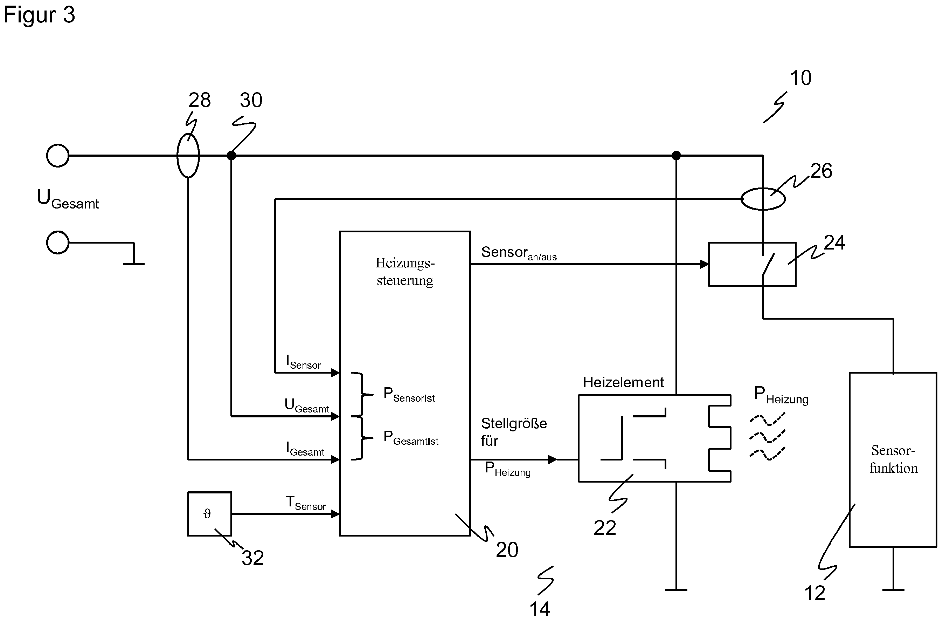

In dem Sensor 10 ist weiterhin eine Heizbaugruppe 14 vorgesehen, deren Aufbau später im Zusammenhang mit Figur 3 näher erläutert wird. Die Heizbaugruppe 14 sorgt dafür, dass in dem Sensor 10 ausreichend hohe Temperaturen $T_{int}$ herrschen und ermöglichen so den Betrieb des Sensors 10 bei tiefen Umgebungstemperaturen $T_{umge-bung}$. Ein Wärmekoppler 16 verteilt die in dem Sensor 10 erzeugte Wärme an die relevanten Stellen. Der Sensor 10 ist in einem Gehäuse 18 untergebracht, das einen Schutz gegen das Eindringen von Fremdkörpern und umgekehrt einen Schutz für den Benutzer vor gefährlichen Spannungen oder sich bewegenden Komponenten bietet. Das Gehäuse 18 dient auch zumindest in gewissem Maße für den Erhalt der Temperatur $T_{int}$ und kann dafür zusätzlich isolierend ausgebildet sein.

Der Sensor 10 ist mit nur einer Sensorfunktionsgruppe 12 gezeigt. Es können weitere Sensorfunktionsgruppen vorgesehen sein, die eine eigene Heizbaugruppe aufweisen.

Es ist aber auch denkbar, dass solche weiteren Sensorfunktionsgruppen nicht kälteempfindlich sind oder mit beheizt werden.

Figur 2 zeigt eine zeitabhängige Leistungsbetrachtung bei herkömmlicher Heizungssteuerung zur Illustration von deren elektrischem Betriebsverhalten. Im oberen Teil ist mit durchgezogener Linie die gesamte Leistung $P_{gesamt}$, mit gepunkteter Linie die reine Heizleistung $P_{Heizung}$ der Heizbaugruppe 14, mit strichpunktierter Linie die Leistungsaufnahme $P_{Sensor}$ der Sensorfunktionsgruppe 12 und mit gestrichelter Linie die mittlere Leistung $P_{gesamt\_AVG}$ gezeigt. Der untere Teil stellt den Temperaturverlauf der Temperatur $T_{Int}$ in dem Sensor 10 dar.

In diesem Beispiel wird zum Betrieb des Sensors 10 bei $T_{Umgebung}$ = -35°C eine Heizleistung von $P_{Gesamt\_AVG}$ =8W benötigt. Es wird angenommen, dass die Sensorfunktionsgruppe 12 bei tiefen Temperaturen ausgeschaltet bleibt, so dass beim Einschalten des Sensors die gesamte Heizleistung $P_{Gesamt}$ über $P_{Heizung}$ aufgebracht werden muss. Dieser Zustand wird so lange beibehalten, bis alle relevanten sensorinternen Bauteile und Komponenten die zulässige Mindesttemperatur erreicht haben. Ab dann kann die Elektronik der Sensorfunktionsgruppe 12 freigegeben werden. Die hierdurch erzeugte Verlustleistung $P_{Sensor}$ von in diesem Beispiel 5W leistet von diesem Zeitpunkt an ebenfalls einen energetischen Beitrag zur Erwärmung des Gesamtgerätes.

Da die herkömmliche Heizbaugruppe einfach mit gleichbleibender Leistung $P_{Heizung}$=8W weiterheizt, nimmt der Sensor 10 in dieser Betriebsphase ein $P_{Gesamt}$=13W auf und setzt dies in Wärme um. Dies führt sensorintern zu unnötig hohen Temperaturen, so dass bei Erreichen einer maximalen oberen Temperaturschwelle die Heizbaugruppe 14 mit der gelieferten Wärmeleistung $P_{Heizung}$ komplett abgeschaltet wird. Die nunmehr allein über $P_{Sensor}$=5W aufgebrachte Heizleistung reicht nicht mehr aus, um den Wärmebedarf des Sensors 10 zu decken. Das wiederum führt bei oder kurz vor Erreichen einer Mindesttemperatur zum Widereinschalten der vollständigen Heizleistung $P_{Hei-zung}$=8W. Diese beiden Zustände alternieren dann im weiteren Verlauf. Um eine durchschnittliche Heizleistung von $P_{Gesamt\_AVG}$ =8W aufzubringen, muss also eine Versorgung für die Spitze von $P_{Heizung}$+$P_{Sensor}$ = 13W vorgehalten werden, die im Grunde überdimensioniert ist. Zudem unterliegt der Temperaturverlauf unnötigen Schwankungen.

Figur 3 zeigt ein Blockdiagramm des Sensors 10, anhand dessen Aufbau und Funktion der Heizbaugruppe 14 genauer beschrieben werden. Die Heizbaugruppe 14 umfasst eine Heizungssteuerung 20, die mit einem Heizelement 22 und einem Schalter 24 zur Aktivierung und Deaktivierung der Sensorfunktionsgruppe 12 verbunden ist.

Die Heizungssteuerung 20 erfasst als Eingangsgrößen den in der Sensorfunktionsgruppe 12 fließenden Strom $I_{Sensor}$, den insgesamt fließenden Strom $I_{Gesamt}$ sowie die Versorgungsspannung $U_{Gesamt}$. Dargestellt sind dafür eine erste Strommesseinheit 26 und eine zweite Strommesseinheit 28 sowie eine Spannungserfassung 30. Es ist aber auch denkbar, diese Werte insgesamt oder teilweise auf andere Weise zu erfassen, etwa durch anfängliche Kalibrierung oder Parametrierung. Eine denkbare weitere Eingangsgröße ist die Temperatur $\vartheta$ eines optionalen Temperaturfühlers 32. Aus den Eingangsgrößen leitet die Heizungssteuerung 20 eine benötigte Heizleistung $P_{Heizung}$ ab und steuert das Heizelement 22 entsprechend an. Außerdem wird je nach Betriebstemperatur die Sensorfunktionsgruppe 12 mittels Schalter 24 aktiviert oder nicht. Die Betriebstemperatur kann über den Temperaturfühler 32 gemessen, aber auch unabhängig beispielsweise durch Ablauf bestimmter Heizdauern geschätzt werden.

Die Heizungssteuerung 20 kann als reine Steuerung (Open-Loop) oder Regelung (Closed-Loop) umgesetzt werden. Für den Open-Loop-Fall kennt die Heizungssteuerung 20 vorzugsweise die Übertragungsfunktion des Heizelements 22, um eine korrekte Stellgröße $P_{Heizung}$ zu bestimmen. Schaltungstechnisch kommen diverse Ausführungsformen der Heizungssteuerung 20 in Betracht, wobei dies von Anforderungen wie Geschwindigkeit, Genauigkeit, benötigten Stückzahlen, Kosten und verfügbaren Technologien abhängt. Das reicht von rein analogen Schaltungen, welche die Rechenoperationen zur Bestimmung der erforderlichen Heizleitung $P_{Heizung}$ ermitteln, bis zu rein digitaler Umsetzung etwa auf einem Mikroprozessor oder -controller, FPGA, einem ASIC oder Mischformen davon mit entsprechenden DACs und ADCs dazwischen. Weiterhin ist zwar die Heizungssteuerung 20 in Figuren und Beschreibung klar von der Sensorfunktionsgruppe 12 getrennt. Es ist aber davon abweichend auch denkbar, die Heizungssteuerung 20 zumindest teilweise mit Elektronik der Sensorfunktionsgruppe 12 zusammenzufassen, wodurch unter Umständen Bauraum und Kosten eingespart werden.

Bei dem Heizelement 22 handelt es sich vorzugsweise um eine oder mehrere direkt oder indirekt steuerbare Elektronikkomponenten. Das können nicht abschließend Halbleiter wie Transistoren oder integrierte Schaltungen, aber auch ohmsche Widerstände sein.

Die Aktivierung der Sensorfunktionsgruppe 12 erfolgt in der Ausführungsform nach Figur 3 über Zuschaltung der Versorgungsspannung mittels Schalter 24, beispielsweise einem Halbleiterschalter oder mechanischen Relais. Alternativ liegt die Spannungsversorgung ständig an der Sensorfunktionsgruppe 12, und sie wird insgesamt oder in Teilbereichen über einen Steuereingang oder mehrere Steuereingänge aktiviert.

Die Heizungssteuerung 20 hat das Ziel, die gesamte Leistungsaufnahme des Sensors 10 konstant zu halten. Vereinfacht ausgedrückt soll immer genau so viel zugeheizt werden, wie nicht ohnehin an der Sensorfunktionsgruppe 12 an Abwärme entsteht.

Zum Verständnis der Ermittlung der Ausgangsgröße $P_{Heizung}$ der Heizungssteuerung 20 in Abhängigkeit ihrer Eingangsgrößen werden nun ein paar Grundüberlegungen vorgestellt. Zunächst gilt

$$P_{Gesamt} = P_{Sensor} + P_{Heizung} = U_{Sensor} * I_{Sensor} + U_{Heizung} * I_{Heizung}.$$

Häufig ist die Spannung im Sensor 10 überall gleich der Versorgungsspannung. Dann addieren sich auch die Ströme zum Gesamtstrom, d.h. es ist

$$P_{Gesamt} = U_{Gesamt} * I_{Gesamt} = U_{Gesamt} * (I_{Sensor} + I_{Heizung}).$$

In der Praxis ist $U_{Gesamt}$ und $I_{Sensor}$ meist schon vorgegeben. Dann kann der erforderliche Wert von $P_{Gesamt}$ über entsprechende Variation von $I_{Heizung}$ erfolgen, wobei dies natürlich auch direkt $I_{Gesamt}$ verändert. Die vereinfachte Regelbedingung ist also, den Heizungsstrom $I_{Heizung}$ so zu wählen, dass er sich mit dem Sensorstrom $I_{Sensor}$ auf einen gewünschten Gesamtwert $I_{Gesamt}$ addiert. Dann geht die Regelabweichung beziehungsweise der Fehler der Eingangsleistung gegen den Zielwert von Null: $P_{Error} = P_{GseamtSet} - PGesamtIst \rightarrow 0$.

Der Sensorstrom $I_{sensor}$ wird in der Ausführungsform nach Figur 3 von der Heizungssteuerung 20 über die erste Strommesseinheit 26 gemessen. Idealerweise erfolgt eine Echtzeitmessung, um beliebige Änderungen nachzuführen. Realistisch sind die Messzyklen entsprechend den Anforderungen zu wählen, d.h. in welchem Maße die Gesamtleistung $P_{Gesamt}$ schwanken darf, aber auch wie stark die zu erwartenden Schwankungen durch Einflüsse wie Versorgungsspannungsschwankungen, Bauteiltoleranzen oder Betriebsmodi des Sensors 10 sind, also etwa Anlaufphase, Sensoraktivität, Sensorparametrierung, Motordrehzahlen und dergleichen. Entsprechend den Anforderungen an die Steuergenauigkeit sind natürlich auch die Berechnungszyklen in der Heizungssteuerung 20 auszulegen.

Es ist alternativ zu einer Strommessung eine Parametrierung oder ein Einlernen denkbar, wobei dies aber ein wenigstens einigermaßen vorhersagbares Arbeitsverhalten der Sensorfunktionsgruppe 12 annimmt oder voraussetzt, dass die Leistungsaufnahme der Sensorfunktionsgruppe 12 eine eher untergeordnete Rolle spielt. Dann sind die resultierenden Fehler und dadurch auftretende Leistungsspitzen am ehesten tolerierbar.

Eine weitere Alternative bestimmt den Sensorstrom $I_{Sensor}$ nicht für die gesamte Sensorfunktionsgruppe 12, sondern nur einen Teil davon, vorzugsweise für die größten Verbraucher, die sinnvoll als Wärmequelle zum Aufheizen des Sensors 10 genutzt werden können, oder für solche Bauteile, deren Aktivität repräsentativ für die Sensorfunktionsgruppe 12 ist und hochskaliert werden kann. Umgekehrt ist auch denkbar, die Heizungssteuerung 20 selbst als Verbraucher beziehungsweise Wärmequelle zu bilanzieren, d.h. den dort verbrauchten Strom zu messen, einzulernen oder zu parametrieren und dem Sensorstrom $I_{Sensor}$ zuzuschlagen.

Die Vereinfachung $U_{Sensor} = U_{Heizung} = U_{Gesamt}$ ist in der Praxis meist ausreichend, aber nicht zwingend erforderlich. Gilt die Annahme in einem bestimmten Sensor 10 nicht, müssen diese Größen lediglich bestimmt, vorgegeben oder geschätzt werden, dann kann die Stellgröße $I_{Heizung}$ beziehungsweise $P_{Heizung}$ nach dem geschilderten Grundprinzip ermittelt werden. Es wird dabei wie allgemein üblich die Leistung indirekt durch idealerweise gleichzeitige Spannungs- und Strommessung bestimmt. Alternativen mit thermischer, photometrischer oder kalorischer Leistungsmessung seien nur der Vollständigkeit halber erwähnt.

Der Gesamtwärmebedarf $P_{Gesamt\_AVG}$ des Sensors 10, der bei idealer Steuerung konstant und damit stets gleich der momentanen Gesamtleistung $P_{Gesamt}$ ist und den die Heizungssteuerung 20 befriedigen soll, wird überwiegend durch die Umgebungsbedingungen, maßgeblich Umgebungstemperatur und Luftbewegungen, sowie durch Sensoreigenschaften wie Gehäusegröße, Gehäusematerial und gewünschte Innentemperatur bestimmt. Dies alles spielt eine wichtige Rolle beim thermischen Design des Sensors 10 während der Entwicklungsphase. Um in dieser Hinsicht flexibel zu bleiben, kann die Heizungssteuerung 20 die Möglichkeit bieten, den Vorgabeparameter $P_{Gesamt\_AVG}$ als variable Größe zu handhaben. Das ermöglicht beispielsweise eine flexible Adaption an veränderte Umstände durch Parametrierung oder zyklisches Messen der Umgebungstemperaturverhältnisse.

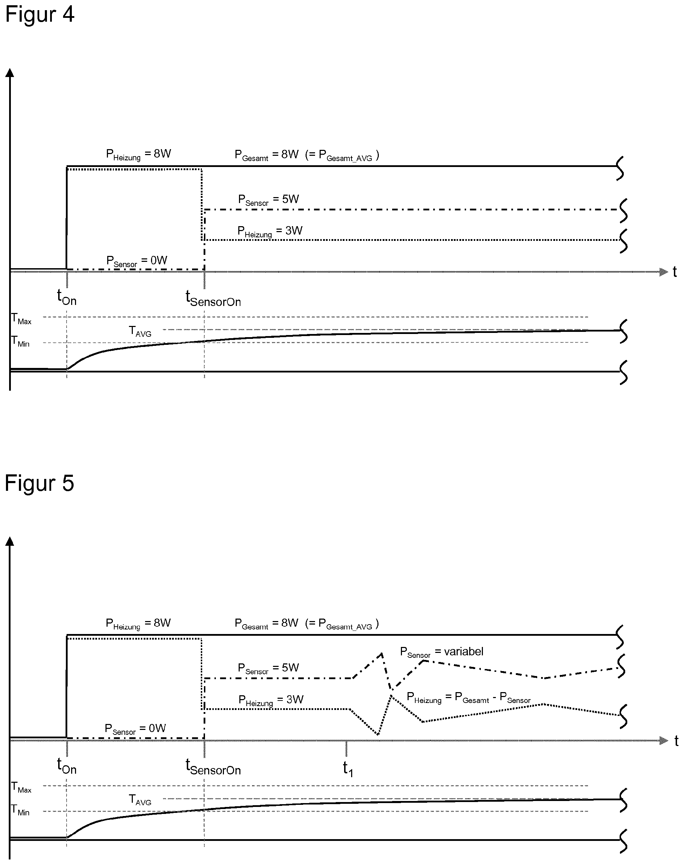

Die Figuren 4 und 5 zeigen jeweils eine zeitabhängige Leistungsbetrachtung ähnlich Figur 2 nun für den Fall zweier erfindungsgemäßer Ausführungsformen der Heizungssteuerung 20. Dabei entspricht Figur 4 dem Fall, in dem die Sensorleistung $P_{Sensor}$ als Konstante betrachtet wird. Sie muss dann gar nicht gemessen werden. Es handelt sich um eine Idealisierung, denn es setzt nur unmerkliche Schwankungseinflüsse durch Betriebszustand, Betriebsart, Versorgungsspannung und dergleichen voraus. Verletzungen der Annahme, dass die Schwankungseinflüsse vernachlässigbar sind, führen zu einer ungenauen Temperatureinstellung, die aber möglicherweise verkraftbar ist.

Wie Figur 4 zeigt, wird in dieser Ausführungsform zunächst mit voller Leistung $P_{Hei-zung}=8W$ geheizt, bis eine ausreichende Betriebstemperatur erreicht ist. Mit Aktivierung der Sensorfunktionsgruppe 12 oder kurz davor wird der Sollwert $P_{Heizung}$ um die bekannte Konstante $P_{Sensor}$ reduziert. Im weiteren Verlauf addieren sich dann $P_{Heizung}=3W$ und $P_{Sensor}=5W$ zur Gesamtleistung $P_{Gesamt}=8W$, und das Ziel $P_{Gesamt}=P_{Gesamt\_AVG}$ ist bereits erreicht. Die Temperatur steigt noch innerhalb ihres Toleranzkorridors an und stabilisiert sich dann. Temperaturschwankungen durch Regelzyklen wie in Figur 2 gibt es nicht.

Figur 5 entspricht dem Fall, in dem die Leistungsaufnahme der Sensorfunktionsgruppe 12 idealisiert in Echtzeit gemessen wird. Zeitliche auftretende Schwankungen in der Leistungsaufnahme $P_{Sensor}$ werden erfasst und genau über $P_{Heizung}$ ausgeglichen. Der Verlauf in Figur 5 ähnelt zunächst bis zum Einschalten der Sensorfunktionsgruppe 12 und eine Weile danach demjenigen in Figur 5. Ab einen willkürlich beispielhaft gewählten Zeitpunkt $t_1$ beginnt jedoch die

EP 3 211 377 B1

Leistungsaufnahme $P_{Sensor}$ der Sensorfunktionsgruppe 12 stark zu schwanken. Die Heizungssteuerung 20 sorgt zu jedem Zeitpunkt für eine genau kompensierende Ergänzung der noch fehlenden Heizleistung durch Anpassung von $P_{Heizung}$ an $P_{Sensor}$. Auch hier werden außen auftretende Leistungsspitzen trotz stark schwankendem $P_{Sensor}$ vermieden, es gibt in dem Sinne keine entsprechenden Spitzenwerte von $P_{Gesamt}$ wie in Figur 2, sondern es gilt ständig $P_{Gesamt}=P_{Gesamt\_AVG}$ trotz des variablen $P_{Sensor}$. Entsprechend konstant ist die zur Geräteerwärmung zur Verfügung gestellte Leistung. Übrigens würden die hier diskutierten Schwankungen der Sensorleistung in der Situation der Figur 2 sogar zu Spitzenwerten $P_{Gesamt}$ deutlich über 13W führen.

Die beiden Leistungsverläufe nach den Figuren 4 und 5 illustrieren die Extremfälle eines völlig konstanten $P_{Sensor}$ beziehungsweise eines in Echtzeit und fehlerfrei gemessenen, schwankenden $P_{Sensor}$. Natürlich sind auch Mittelwege aus beiden Möglichkeiten denkbar, etwa mit langsamer zyklischer Messung und entsprechenden konstanten Intervallen von $P_{Heizung}$, oder einer Modellierung eines veränderlichen $P_{sensor}$.

Ein Vergleich der Figuren 4 und 5 mit Figur 2 unterstreicht die Vorteile der Erfindung. Herkömmlich wird sogar ohne Schwankungen der Leistungsaufnahme der Sensorfunktionsgruppe 12 eine Spitzenleistung von $P_{Gesamt}=13W$ benötigt. Versorgung, Leitungen und Absicherung müssen dementsprechend für diese Spitzenleistungen und -ströme ausgelegt sein. Erfindungsgemäß dagegen wird der Spitzenwert $P_{Gesamt}=8W$ nicht überschritten, und entsprechend kleiner können die Versorgung und die damit verbundenen Bauteile gewählt werden. Darüber hinaus unterliegt der Temperaturverlauf $T_{Int}$ im Geräteinneren im eingeschwungenen Zustand praktisch keinen Schwankungen mehr. Das bedeutet weniger thermischen Stress an den Bauteilen und Lötstellen im Geräteinneren.

Diese vorteilhaften Effekte können noch verstärkt werden, wenn ein Wärmekoppler 16 vorgesehen ist und vorzugsweise nicht nur das Heizelement 22, sondern auch die relevanten, verlustleistungserzeugenden Komponenten der Sensorfunktionsgruppe 12 möglichst gut thermisch ankoppeln. Der Wärmekoppler 16 greift die Wärme von den Wärmequellen ab und verteilt sie an die kritischen Stellen im Sensor 10. Eine großflächige Geometrie des Wärmekopplers 16 kann gleichzeitig zur Temperaturhomogenisierung der Temperatur $T_{Int}$ im Geräteinnern dienen.

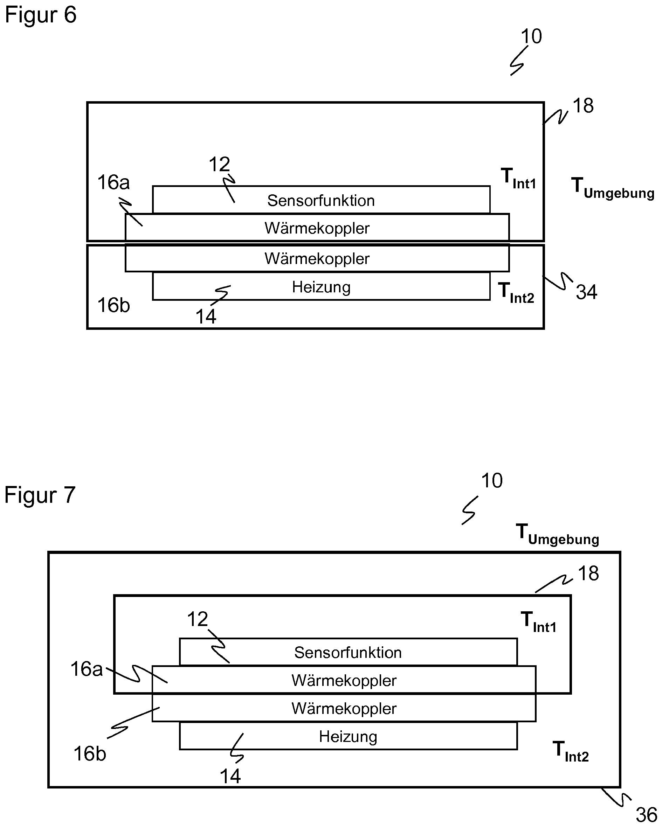

Die Figuren 6 und 7 zeigen abschließend noch zwei mechanische Ausführungsformen des Sensors 10 als Alternativen zu dem Grundaufbau der Figur 1.

In der Ausführungsform nach Figur 6 wird die Heizungsbaugruppe 14 nicht im eigentlichen Gehäuse 18 des Sensors 10 untergebracht, sondern es ist ein separates Heizmodul mit eigenem Gehäuse 34 vorgesehen. Vorzugsweise berühren sich die beiden Gehäuse 18, 34 an mindestens einer Seite großflächig, und die thermische Anbindung wird durch beidseitige Wärmekoppler 16a-b noch weiter unterstützt.

In der Ausführungsform nach Figur 7 umhüllt die Heizungseinheit mit einem eigenen Gehäuse 36 das Gehäuse 18 des Sensors 10 und umgibt diesen vollständig ("Gehäuse im Gehäuse"). Die Anforderungen an die Wärmekopplung können dabei möglicherweise etwas weniger streng sein. Trotzdem sind auch hier vorzugsweise beidseitige Wärmekoppler 16a-b vorgesehen.

Die Modularität in beiden Varianten nach Figur 6 und 7 bieten mehr Flexibilität sowie Erweiterungs-, Nachrüst- und Kombinationsmöglichkeiten. Das anhand der Figur 3 erläuterte Prinzip mit der Heizungssteuerung 20 kann beibehalten werden. Um weiterhin eine Strom- und eventuell auch Spannungsmessung der Sensorfunktionsgruppe 12 zu ermöglichen, kann der elektrische Sensoranschluss über das Heizungsmodul geschleift werden.

**Patentansprüche**

1. Sensor (10), insbesondere optoelektronischer Sensor, der mindestens eine Sensorfunktionsgruppe (12), eine Heizeinrichtung (14, 22) und eine Heizungssteuerung (14, 20) aufweist, um eine Heizleistung ($P_{Heizung}$) der Heizeinrichtung (14, 22) zu steuern, wobei die Heizungssteuerung (20) dafür ausgebildet ist, die Heizleistung ($P_{Hei-zung}$) an eine Leistungsaufnahme ($P_{Sensor}$) der Sensorfunktionsgruppe (12) anzupassen, indem sie die Summe aus Heizleistung ($P_{Heizung}$) und Leistungsaufnahme ($P_{Sensor}$) konstant hält, wobei die Leistungsaufnahme ($P_{Sensor}$) nicht ausreicht, den Wärmebedarf des Sensor (10) zu decken.

2. Sensor (10) nach Anspruch 1,
wobei die Sensorfunktionsgruppe (12) mindestens eines der folgenden Bauelemente aufweist: einen Sender, einen Empfänger, eine analoge Schaltung, einen digitalen Baustein, einen Motor.

3. Sensor (10) nach einem der vorhergehenden Ansprüche,
wobei die Heizeinrichtung (14, 22) eine steuerbare Elektronikkomponente als Heizelement (22) aufweist.

4. Sensor (10) nach einem der vorhergehenden Ansprüche,
wobei die Heizungssteuerung (20) dafür ausgebildet ist, in einer Anfangsphase mit hoher Heizleistung zu heizen und dann erst die Sensorfunktionsgruppe (12) aktiv zu schalten (24).

**5.** Sensor (10) nach einem der vorhergehenden Ansprüche,
wobei die Heizungssteuerung(20) dafür ausgebildet ist, die Leistungsaufnahme ($P_{Sensor}$) zu parametrieren oder einzulernen.

**6.** Sensor (10) nach einem der vorhergehenden Ansprüche,
wobei die Heizungssteuerung (20) dafür ausgebildet ist, die Leistungsaufnahme ($P_{Sensor}$) zu messen.

**7.** Sensor (10) nach Anspruch 6,
wobei die Heizeinrichtung (14, 22) eine Strommesseinheit (28) für den in der Sensorfunktionsgruppe fließenden Strom aufweist, um so die Leistungsaufnahme ($P_{Sensor}$) zu bestimmen.

**8.** Sensor (10) nach einem der vorhergehenden Ansprüche,
wobei die Heizungssteuerung dafür ausgebildet ist, die Leistungsaufnahme ($P_{Sensor}$) nur für einen Teil der Sensorfunktionsgruppe (12) zu bestimmen.

**9.** Sensor (10) nach einem der vorhergehenden Ansprüche,
der einen mit der Heizeinrichtung (14, 20) verbundenen Temperaturfühler (32) aufweist.

**10.** Sensor (10) nach einem der vorhergehenden Ansprüche,
wobei die Heizeinrichtung (14) in einem eigenen Gehäuse (34) untergebracht ist, das an ein Gehäuse (18) der Sensorfunktionsgruppe (12) angekoppelt wird.

**11.** Sensor nach einem der Ansprüche 1 bis 9,
wobei die Heizeinrichtung (14) in einem Gehäuse (36) untergebracht ist, das ein Gehäuse (18) der Sensorfunktionsgruppe (12) umgibt.

**12.** Sensor (10) nach einem der vorhergehenden Ansprüche,
der mindestens ein Wärmekoppelelement (16) zur Weiterleitung von Wärme der Heizeinrichtung (14, 22) und/oder von thermisch wirksamen Sensorkomponenten an kritische Stellen der Sensorfunktionsgruppe (12) aufweist.

**13.** Verfahren zum Heizen eines Sensors (10), insbesondere eines optoelektronisches Sensors, wobei mindestens eine Sensorfunktionsgruppe (12) des Sensor (10) mit einer Heizeinrichtung (14, 20, 22) beheizt und dabei eine Heizleistung der Heizeinrichtung (14, 20, 22) gesteuert wird, wobei die Heizleistung ($P_{Heizung}$) an eine Leistungsaufnahme ($P_{Sensor}$) der Sensorfunktionsgruppe (12) angepasst wird, indem die Summe aus Heizleistung ($P_{Hei-zung}$) und Leistungsaufnahme ($P_{Sensor}$) konstant gehalten wird, wobei die Leistungsaufnahme ($P_{Sensor}$) nicht ausreicht, den Wärmebedarf des Sensor (10) zu decken.

**Claims**

**1.** A sensor (10), in particular an optoelectronic sensor, comprising at least one sensor functional group (12), a heating device (14, 22), and a heating control (14, 20) for controlling a heating power ($P_{heating}$) of the heating device (14, 20), wherein the heating control (20) is configured to adapt the heating power ($P_{heating}$) to a power consumption ($P_{sensor}$) of the sensor functional group (12) in that it keeps the sum of heating power ($P_{heating}$) and power consumption ($P_{sensor}$) constant, wherein the power consumption ($P_{sensor}$) does not suffice to cover the heat requirement of the sensor (10).

**2.** The sensor (10) in accordance with claim 1,
wherein the sensor functional group (12) has at least one of the following components: a transmitter, a receiver, an analog circuit, a digital module, a motor.

**3.** The sensor (10) in accordance with one of the preceding claims,
wherein the heating device (14, 22) has a controllable electronic component as the heating element (22).

**4.** The sensor (10) in accordance with one of the preceding claims,
wherein the heating control (20) is configured to heat at a high heating power in a starting phase and only then to switch (24) the sensor functional group (12) active.

**5.** The sensor (10) in accordance with one of the preceding claims,
wherein the heating control (20) is configured to parameterize or teach the power consumption (Psensor).

**6.** The sensor (10) in accordance with one of the preceding claims,
wherein the heating control (20) is configured to measure the power consumption ($P_{sensor}$).

**7.** The sensor (10) in accordance with claim 6,
wherein the heating device (14, 22) has a current measurement unit (28) for the current flowing in the sensor functional group in order thus to determine the power consumption (Psensor).

**8.** The sensor (10) in accordance with one of the preceding claims,
wherein the heating control is configured to determine the power consumption ($P_{sensor}$) only for a part of the sensor functional group (12).

**9.** The sensor (10) in accordance with one of the preceding claims,
that has a temperature probe (32) connected to the heating device (14, 20).

**10.** The sensor (10) in accordance with one of the preceding claims,
wherein the heating device (14) is accommodated in its own housing (34) that is coupled to a housing (18) of the sensor functional group (12).

**11.** The sensor (10) in accordance with one of claims 1 to 9,
wherein the heating device (14) is accommodated in a housing (36) that surrounds a housing (18) of the sensor functional group (12).

**12.** The sensor (10) in accordance with one of the preceding claims,
that has at least one heat coupling element (16) for conducting heat of the heating device (14, 22) and/or from thermally active sensor components to critical points of the sensor functional group (12).

**13.** A method of heating a sensor (10), in particular an optoelectronic sensor,
wherein at least one sensor functional group (12) of the sensor (10) is heated by a heating device (14, 20, 22), with a heating power ($P_{heating}$) of the heating device (14, 20, 22) being controlled, wherein the heating power ($P_{heating}$) is adapted to a power consumption ($P_{sensor}$) of the sensor functional group (12) in that the sum of heating power ($P_{heating}$) and power consumption ($P_{sensor}$) is kept constant, wherein the power consumption ($P_{sensor}$) does not suffice to cover the heat requirement of the sensor (10.

**Revendications**

**1.** Capteur (10), en particulier capteur optoélectronique, qui comprend au moins un groupe fonctionnel de capteur (12), un moyen de chauffage (14, 22) et une commande de chauffage (14, 20), afin de commander une puissance de chauffage ($P_{Heizung}$) du moyen de chauffage (14, 22),
dans lequel la commande de chauffage (20) est réalisée pour adapter la puissance de chauffage ($P_{Heizung}$) à une puissance absorbée ($P_{Sensor}$) du groupe fonctionnel de capteur (12) en maintenant constante la somme de la puissance de chauffage ($P_{Heizung}$) et de la puissance absorbée ($P_{Sensor}$), la puissance absorbée ($P_{Sensor}$) n'étant pas suffisante pour couvrir le besoin en chaleur du capteur (10).

**2.** Capteur (10) selon la revendication 1,
dans lequel le groupe fonctionnel de capteur (12) comprend l'un au moins parmi les composants suivants : un émetteur, un récepteur, un circuit analogique, un élément constitutif numérique, un moteur.

**3.** Capteur (10) selon l'une des revendications précédentes,
dans lequel le moyen de chauffage (14, 22) comprend un composant électronique pilotable à titre d'élément chauffant (22).

**4.** Capteur (10) selon l'une des revendications précédentes,
dans lequel la commande de chauffage (20) est réalisée pour chauffer à une puissance de chauffage élevée pendant une phase initiale et pour n'activer (24) qu'ensuite le groupe fonctionnel de capteur (12).

**5.** Capteur (10) selon l'une des revendications précédentes,
dans lequel la commande de chauffage (20) est réalisée pour paramétrer ou apprendre la puissance absorbée $(P_{Sensor})$.

**6.** Capteur (10) selon l'une des revendications précédentes,
dans lequel la commande de chauffage (20) est réalisée pour mesurer la puissance absorbée $(P_{Sensor})$.

**7.** Capteur (10) selon la revendication 6,
dans lequel le moyen de chauffage (14, 22) comprend une unité de mesure de courant (28) pour le courant électrique circulant dans le groupe fonctionnel de capteur, afin de déterminer ainsi la puissance absorbée $(P_{Sensor})$.

**8.** Capteur (10) selon l'une des revendications précédentes,
dans lequel la commande de chauffage est réalisée pour déterminer la puissance absorbée $(P_{Sensor})$ uniquement pour une partie du groupe fonctionnel de capteur (12).

**9.** Capteur (10) selon l'une des revendications précédentes,
qui comprend un capteur de température (32) relié au moyen de chauffage (14, 20).

**10.** Capteur (10) selon l'une des revendications précédentes,
dans lequel le moyen de chauffage (14) est logé dans un propre boîtier (34) qui est couplé à un boîtier (18) du groupe fonctionnel de capteur (12).

**11.** Capteur (10) selon l'une des revendications 1 à 9,
dans lequel le moyen de chauffage (14) est logé dans un boîtier (36) qui entoure un boîtier (18) du groupe fonctionnel de capteur (12).

**12.** Capteur (10) selon l'une des revendications précédentes,
qui comprend au moins un élément de couplage thermique (16) pour transmettre à des emplacements critiques du groupe fonctionnel de capteur (12) la chaleur du moyen de chauffage (14, 22) et/ou de composants de capteur thermiquement efficaces.

**13.** Procédé pour chauffer un capteur (10), en particulier un capteur optoélectronique, dans lequel on chauffe au moins un groupe fonctionnel de capteur (12) du capteur (10) à l'aide d'un moyen de chauffage (14, 20, 22) et on commande une puissance de chauffage du moyen de chauffage (14, 20, 22),
dans lequel on adapte la puissance de chauffage $(P_{Heizung})$ à une puissance absorbée $(P_{Sensor})$ du groupe fonctionnel de capteur (12) en maintenant constante la somme de la puissance de chauffage $(P_{Heizung})$ et de la puissance absorbée $(P_{Sensor})$, la puissance absorbée $(P_{Sensor})$ n'étant pas suffisante pour couvrir le besoin en chaleur du capteur (10).

## Figur 1

14

10

Heizung

Wärmekoppler

Sensorfunktion

$T_{Umgebung}$

$T_{Int}$

16   12   18

## Figur 2

$P_{Gesamt} = 13W$   $P_{Gesamt} = 13W$   $P_{Gesamt} = 13W$

$P_{Gesamt} = 8W$   $P_{Heizung} = 8W$   $P_{Gesamt\_AVG} = 8W$

$P_{Gesamt} = 5W$   $P_{Gesamt} = 5W$

$P_{Sensor} = 5W$

$P_{Heizung} = 0W$

t

$t_{On}$   $t_{SensorOn}$

$T_{Max}$   $T_{AVG}$

$T_{Min}$

**Figur 3**

EP 3 211 377 B1

## Figur 4

$P_{Heizung} = 8W$      $P_{Gesamt} = 8W$ $(= P_{Gesamt\_AVG})$

$P_{Sensor} = 5W$

$P_{Heizung} = 3W$

$P_{Sensor} = 0W$

$t$

$t_{On}$      $t_{SensorOn}$

$T_{Max}$

$T_{AVG}$

$T_{Min}$

## Figur 5

$P_{Heizung} = 8W$      $P_{Gesamt} = 8W$ $(= P_{Gesamt\_AVG})$

$P_{Sensor} = $ variabel

$P_{Sensor} = 5W$

$P_{Heizung} = 3W$

$P_{Heizung} = P_{Gesamt} - P_{Sensor}$

$P_{Sensor} = 0W$

$t$

$t_{On}$      $t_{SensorOn}$      $t_1$

$T_{Max}$

$T_{AVG}$

$T_{Min}$

Figur 6

10

18

16a

12

$T_{Int1}$

$T_{Umgebung}$

Sensorfunktion

Wärmekoppler

Wärmekoppler

Heizung

$T_{Int2}$

34

16b

14

Figur 7

10

$T_{Umgebung}$

18

12

$T_{Int1}$

Sensorfunktion

16a

Wärmekoppler

Wärmekoppler

16b

Heizung

$T_{Int2}$

14

36

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19933518 B4
- DE 102006054492 B4
- US 6612493 B
- US 7798411 B2
- CN 103869844 B